(19) Europäisches Patentamt
European Patent Office
Office européen des brevets

(11) Veröffentlichungsnummer: **0 033 098**
**B1**

(12) # EUROPÄISCHE PATENTSCHRIFT

(45) Veröffentlichungstag der Patentschrift: **23.11.83**

(51) Int. Cl.³: **C 07 F 7/10,** A 01 N 55/00

(21) Anmeldenummer: **81100285.6**

(22) Anmeldetag: **16.01.81**

(54) **N-Methyl-N-silyl-carbamate, Verfahren zu ihrer Herstellung und ihre Verwendung zur Bekämpfung von Schädlingen.**

(30) Priorität: **25.01.80 DE 3002603**

(43) Veröffentlichungstag der Anmeldung:
**05.08.81 Patentblatt 81/31**

(45) Bekanntmachung des Hinweises auf die Patenterteilung:
**23.11.83 Patentblatt 83/47**

(84) Benannte Vertragsstaaten:
**AT BE DE FR GB IT NL**

(56) Entgegenhaltungen:
**DE - A - 2 231 249**
**FR - A - 2 287 452**
**US - A - 2 906 756**

(73) Patentinhaber: **BASF Aktiengesellschaft,**
**Carl-Bosch-Strasse 38, D-6700 Ludwigshafen (DE)**

(72) Erfinder: **Acker, Rolf-Dieter, Dr., Tuchbleiche 8,**
**D-6906 Leimen (DE)**
Erfinder: **Hamprecht, Gerhard, Dr.,**
**Rote-Turm-Strasse 28, D-6940 Weinheim (DE)**
Erfinder: **Kiehs, Karl, Dr., Sudetenstrasse 22,**
**D-6840 Lampertheim (DE)**
Erfinder: **Adolphi, Heinrich, Dr., Kalmitweg 11,**
**D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

N-Methyl-N-silyl-carbamate, Verfahren zu ihrer Herstellung und ihre Verwendung zur Bekämpfung von Schädlingen

Die vorliegende Erfindung betrifft N-Methyl-N-silyl-carbamate, Verfahren zu ihrer Herstellung, Schädlingsbekämpfungsmittel, die diese Carbamate als Wirkstoffe enthalten, sowie ein Verfahren zur Bekämpfung von Schädlingen mit diesen Verbindungen.

Es ist bekannt, dass Aryl-N-methyl-carbamate sich zur Bekämpfung von Schädlingen eignen. Sie sind wirksam gegen fressende und saugende Insekten sowie gegen Spinnmilben (DE-OS 22 31 249; US-PS 2 903 478).

Es wurde gefunden, dass N-Methyl-N-silyl-carbamate der Formel I

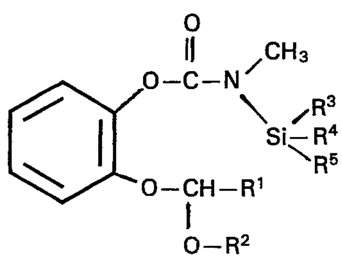

(I),

in der

$R^1$ Wasserstoff oder einen gegebenenfalls durch Halogen substituierten Alkylrest mit bis zu 4 Kohlenstoffatomen,

$R^2$, $R^3$ und $R^4$ unabhängig voneinander einen Alkylrest mit bis zu 4 Kohlenstoffatomen und

$R^5$ einen Alkylrest mit bis zu 4 Kohlenstoffatomen oder Phenyl bedeuten,

bekannten Aryl-N-methyl-carbamaten, in ihrer Wirkung als Schädlingsbekämpfungsmittel, insbesondere in ihrer insektiziden Wirkung, überlegen sind. Die Warmblütertoxizität der N-Methyl-N-silyl-carbamate ist geringer als die der entsprechenden, nicht silylierten Carbamate. Die Warmblütertoxizität des 2-(1-Methoxy-2-chlor-ethoxy)-phenyl-N-methyl-N-trimethylsilyl-carbamats ist beispielsweise um den Faktor 3 geringer als die von 2-(1-Methoxy-2-chlor-ethoxy)-phenyl-N-methyl-carbamat.

Die Substituenten $R^2$, $R^3$, $R^4$ und $R^5$ in Formel I stehen für unverzweigte oder verzweigte Alkylreste mit bis zu 4 Kohlenstoffatomen, wie Methyl, Ethyl, n-Propyl, i-Propyl, n-Butyl, tert.-Butyl, i-Butyl. $R^5$ kann ausserdem Phenyl bedeuten. $R^1$ bedeutet einen durch Halogen substituierten Alkylrest mit bis zu 4 Kohlenstoffatomen, wie Chlormethyl, Brommethyl, Jodmethyl, 1-Chlorethyl, 2-Chlorethyl, 1-Bromethyl, 2-Bromethyl.

Die N-Methyl-N-silyl-carbamate der Formel I können durch Umsetzung eines Carbamats der Formel II

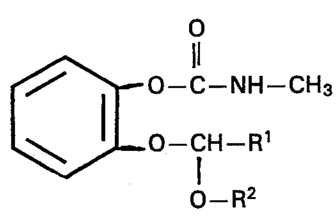

(II),

in der $R^1$ und $R^2$ die oben genannten Bedeutungen haben, mit einem Halogensilan der Formel III

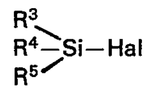

(III),

in der $R^3$, $R^4$ und $R^5$ die oben genannten Bedeutungen haben und Hal für Halogen steht, gegebenenfalls in Gegenwart eines Lösungsmittels und/oder in Gegenwart eines säurebindenden Mittels erhalten werden.

Als säurebindende Mittel kommen beispielsweise Alkalimetylle, Alkalihydride, Alkali- und Erdalkalihydroxide, -carbonate oder -bicarbonate, metallorganische Verbindungen und tertiäre organische Amine in Betracht. Besonders geeignet sind Lithium, Lithiumhydrid, Natriumhydrid, Kaliumhydrid, Calciumhydrid, Phenyllithium, n-Butyllithium, Methyllithium, Natriummethylat, Magnesiumethylat, Methylmagnesiumbromid, Ethylmagnesiumbromid, Phenylmagnesiumbromid, Phenylmagnesiumchlorid, Kaliummethylat, Natriumpropylat, Aluminiumisopropylat, Natriumbutylat, Lithiummethylat, Calciumcyclohexanolat, Natriumpropylat, Kalium-tert.-butylat, Trimethylamin, Triethylamin, Tri-n-propylamin, Triisopropylamin, Tributylamin, Triisobutylamin, Tri-sec.-butylamin, Tri-tert.-butylamin, Tribenzylamin, Tricyclohexylamin, Triamylamin, Trihexylamin, N,N-Dimethylanilin, N,N-Diethylanilin, N,N-Diisopropylanilin, N,N-Dimethyltoluidin, N,N-Diethyltoluidin, N,N-Dipropyltoluidin, 4-N,N-Dimethylamino-pyridin, 4-N,N-Diethylamino-pyridin, N-Methylpiperidin, N-Ethylpiperidin, N-Methylpyrrolidin, N-Ethylpyrrolidin, N-Methylpyrrol, N-Methylmorpholin, N-Ethylmorpholin, N-Methylhexamethylenimin, Pyridin, Chinolin, $\alpha$-, $\beta$-, $\gamma$-Picolin, Acridin, N,N,N',N'-Tetramethylethylendiamin, N-Ethyldiisopropylamin, N,N-Dimethylcyclohexylamin. Es können aber auch andere, üblicherweise verwendete basische Stoffe eingesetzt werden.

Es kann zweckmässig sein, die Umsetzung in Gegenwart eines für Silylierungsreaktionen üblichen Reaktionsbeschleunigers durchzuführen. Geeignet sind beispielsweise Imidazol oder 4-Dimethylamino-pyridin.

Die Umsetzung wird im allgemeinen bei einer Temperatur zwischen $-40$ bis $+100\,°C$, vorzugsweise $-40$ bis $+80\,°C$, während 30 Minuten und 200 Stunden, vorzugsweise 1 Stunde und 20 Stunden, drucklos oder unter Druck, diskontinuierlich oder kontinuierlich durchgeführt.

Im allgemeinen setzt man zur Herstellung des Silylcarbamats der Formel I pro Mol Verbindung der Formel II 0,5 bis 2 Mol, vorzugsweise 0,9 bis 1,5 Mol, der Verbindung der Formel III und gegebenenfalls 0,5 bis 2 Mol, vorzugsweise 0,9 bis 1,5 Mol, des säurebindenden Mittels ein. Verwendet man als säurebindendes Mittel ein Alkalimetall, ein Alkalihydrid, ein Alkali- oder Erdalkalialkoholat, so kann das Carbamat der Formel II zunächst in sein Alkali- oder Erdalkalisalz überführt und in dieser Form eingesetzt werden.

In einer bevorzugten Verfahrensweise wird der Säureakzeptor portionsweise einer Lösung des Carbamats und des Halogentrialkylsilans in einem geeigneten Lösungsmittel zugefügt; es ist aber auch die portionsweise Zugabe der Ausgangsstoffe zum säurebindenden Mittel möglich.

Als Verbindungen der Formel III werden aus wirtschaftlichen Gründen Chloride bevorzugt. Es können jedoch auch die Bromide, Jodide und Fluoride verwendet werden. Die Verbindungen der Formel III können nach den in Organosilicon Compounds, S. 167 bis 193, Academic Press., Inc., New York, 1960 beschriebenen Methoden hergestellt werden. Die Carbamate der Formel II sind bekannt.

Die N-Methyl-N-silyl-carbamate der Formel I lassen sich ferner durch Umsetzung der Carbamate der Formel II mit einem Silylüberträger der Formel IV

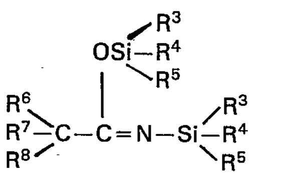

(IV),

in der $R^3$, $R^4$ und $R^5$ die oben genannten Bedeutungen haben und $R^6$, $R^7$ und $R^8$ unabhängig voneinander Wasserstoff, Halogen oder einen Alkylrest mit bis zu 4 Kohlenstoffatomen bedeuten, erhalten. Die Umsetzung wird in Gegenwart eines inerten Lösungsmittels gegebenenfalls unter Zusatz eines Reaktionsbeschleunigers durchgeführt.

Setzt man 2-Isopropoxy-phenyl-N-methyl-carbamat mit N,O-Bis-trimethylsilyl-trifluoracetamid in Gegenwart von Trimethylchlorsilan als Reaktionsbeschleuniger um, so kann der Reaktionsablauf des Verfahrens durch das folgende Formelschema wiedergegeben werden:

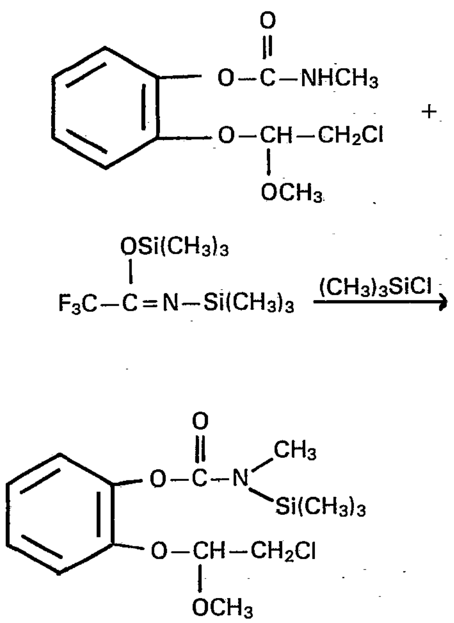


Man verwendet im allgemeinen bei diesem Verfahren zur Herstellung des Carbamats der Formel I auf 1 Mol der Verbindung der Formel II 0,5 bis 2 Mol, vorzugsweise 0,9 bis 1,3 Mol, des Silylierungsmittels der Formel IV. Die Reihenfolge der Zugabe der Komponenten ist beliebig. Der Druck ist nicht kritisch; der Einfachheit halber wird Atmosphärendruck bevorzugt.

Das Verfahren wird im allgemeinen bei einer Temperatur zwischen −40 bis +100°C, vorzugsweise −40 bis +80°C, während 30 Minuten und 200 Stunden, vorzugsweise 1 Stunde und 20 Stunden, durchgeführt.

Als Reaktionsbeschleuniger kommen beispielsweise Trialkylchlorsilane der Formel III, wie Trimethylchlorsilan, in Betracht. Zweckmässigerweise verwendet man 0,5 bis 10 Mol-% Reaktionsbeschleuniger, bezogen auf den Trialkylsilylüberträger der Formel IV.

Die Verbindungen der Formel IV und ihre Herstellung sind in Pierce, A.E., Silylation of Organic Compounds, Pierce Chem. Comp., Rockford, Ill., 1968, beschrieben.

Für beide Verfahren zur Herstellung der N-Methyl--N-silyl-carbamate der Formel I können beispielsweise folgende inerte Verdünnungsmittel verwendet werden: Formamide, wie Dimethylformamid, Dimethylacetamid; Nitrile, wie Acetonitril, Benzonitril, Butyronitril; Sulfoxide, wie Dimetylsulfoxid; Phosphorsäureamide, wie Hexamethylphosphorsäuretriamid; Ketone, wie Aceton, Ethylmethylketon, Cyclohexanon, Acetophenon; Ether, wie Tetrahydrofuran, Anisol, Dimethyloxiethan, n-Butylethylether, Dioxan; Nitroalkane, wie Nitromethan; Nitrobenzol; Harnstoffe, wie Tetramethylharnstoff; Sulfone, wie Sulfolan; Ester, wie Essigsäuremethylester, Propionsäuremethylester, Ameisensäuremethylester; Halogenkohlenwasserstoffe, insbesondere Chlorkohlenwasserstoffe, beispielsweise Methylenchlorid, Chloroform, 1,2-Dichlorethan, 1,1,2,2- oder 1,1,1,2-Tetrachlorethan, Dichlorpropan, Trichlorethylen, Chlorbenzol, o-, m-, p-Dichlorbenzol, Fluorbenzol, o-, m-, p-Chlortoluol, Dichlornaphthalin, Tetrachlorkohlenstoff; aliphatische oder cycloaliphatische Kohlenwasserstoffe wie Heptan, Pinan, Benzinfraktionen innerhalb eines Siedepunktintervalls von 70 bis 190°C, Cyclohexan, Methylcyclohexan, Dekalin, Petrolether, Ligroin, 2,2,4-Trimethylpentan, Octan; aromatische Kohlenwasserstoffe, wie Benzol, Toluol, o-, m-, p-Cymol, o-, m-, p-Xylol, Tetralin; und entsprechende Gemische. Zweckmässigerweise verwendet man das Lösungsmittel in einer Menge von 100 bis 2000 Gew.-%, vorzugsweise 100 bis 1000 Ge.-%, bezogen auf die Ausgangsverbindung der Formel II.

Zur Vermeidung von Silylchlorid-Verlusten durch Hydrolyse empfiehlt es sich, die Umsetzung in Gegenwart eines Schutzgases, z.B. in Gegenwart von Stickstoff oder Argon, durchzuführen.

Die Endprodukte der Formel I können durch Einengen des Lösungsmittels, nach dem Abfiltrieren von Ungelöstem, isoliert werden. Gegebenenfalls kann zur weiteren Reinigung in Lösungsmitteln, wie z.B. Pentan, Petrolether oder Cyclohexan, aufgenommen werden, wobei das Lösungsmittel nach erneuter Filtration unter vermindertem Druck entfernt wird. Auch eine Reinigung durch Chromatographie ist möglich.

Die erfindungsgemässen Verbindungen können auch nach folgendem Reaktionsschema hergestellt werden:

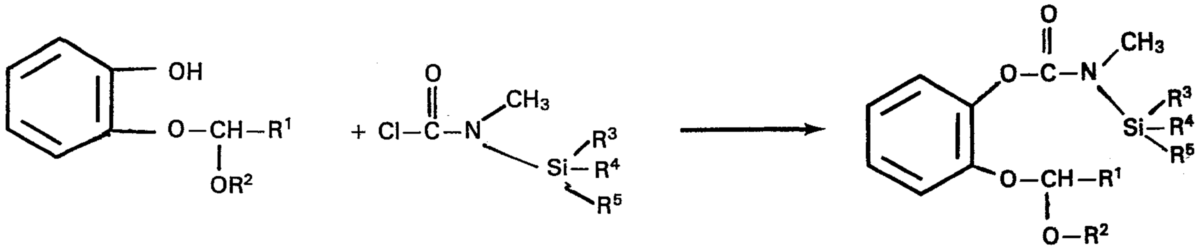

Dabei haben die Substituenten $R^1$, $R^2$, $R^3$, $R^4$ und $R^5$ die oben genannten Bedeutungen.

Weiterhin sind Transsilylierungen mit anderen bekannten Silylierungsreagentien durchführbar, wie z.B. mit Hexamethyldisilazan, N-Trialkylsilyldialkylaminen und N-Trialkylsilylcarbonsäureamiden.

Die folgenden Beispiele erläutern die Herstellung der N-Methyl-N-silyl-carbamate der Formel I. Die Mengenangaben sind Gewichtsteile.

*Beispiel 1*

5,2 Teile 2-(1-Methoxy-2-chlor-ethoxy)-phenyl-N-methyl-carbamat werden in 25 Teilen Tetrahydrofuran gelöst. Man gibt 3,1 Teile Trimethylchlorsilan bei 0°C unter Stickstoff zu, tropft dann 2,6 Teile Triethylamin portionsweise zu, hält eine Stunde bei Raumtemperatur und rührt 6 Stunden bei 40 bis 50°C. Nach Abkühlen und Abfiltrieren von Ungelöstem wird die Lösung eingeengt, in Cyclohexan aufgenommen und erneut eingeengt. Man erhält 3,9 Teile 2-(1-Mthoxy-2-chlor-ethoxy)-phenyl-N-methyl-N-trimethylsilyl-carbamat (Wirkstoff Nr. 1); $n_D^{22}$ = 1.5000.

NMR (δ in ppm): 0,30 [s, 9H, $Si(CH_3)_3$]; 2,8-3,0 (m, 3H, $CH_3$); 3,0 (s, 3H, $OCH_3$); 3,4-3,8 (m, 2H, $CH_2$); 5,1-5,3 (m, 1H, cH), 6,8-7,3 (m, 4H, Aromat).

*Beispiel 2*

4,67 Teile 2-(1-Methoxy-2-chlor-ethoxy)-phenyl-N-methyl-carbamat werden in 15 Teilen Acetonitril gelöst. 4,64 Teile N,O-Bis-trimethylsilyl-trifluoracetamid und 0,1 Teile Trimethylchlorsilan werden dann nacheinander zugegeben. Die Mischung wird 2 Stunden bei 40°C gehalten und weitere 2 Stunden bei Raumtemperatur gerührt. Nach Einengen der Lösung werden die flüchtigen Bestandteile unter vermindertem Druck bei 40°C/0,3 mbar entfernt. Man erhält 4,8 Teile 2-(1-Methoxy-2-chlor-ethoxy)-phenyl-N-methyl-N-trimethylsilyl-carbamat (Wirkstoff Nr. 1).

Analog lassen sich beispielsweise folgende Carbamate herstellen:

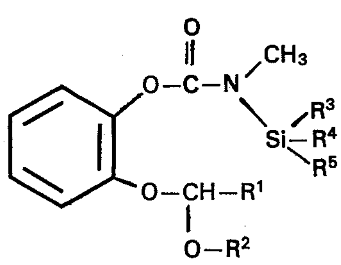

| Nr. | $R^1$ | $R^2$ | $R^3$ | $R^4$ | $R^5$ | $n_D$/NMR-Daten |
|---|---|---|---|---|---|---|
| 2 | $CH_3$ | $CH_3$ | $CH_3$ | $CH_3$ | $CH_3$ | |
| 3 | $CH_3$ | $C_2H_5$ | $CH_3$ | $CH_3$ | $CH_3$ | |
| 4 | $CH_2Cl$ | $CH_3$ | $CH_3$ | $CH_3$ | $C_2H_5$ | |
| 5 | $CH_2Cl$ | $CH_3$ | $CH_3$ | $C_2H_5$ | $C_2H_5$ | |
| 6 | $CH_2Cl$ | $CH_3$ | $C_2H_5$ | $C_2H_5$ | $C_2H_5$ | |
| 7 | $CH_2Cl$ | $CH_3$ | $CH_3$ | $CH_3$ | n-$C_3H_7$ | |
| 8 | $CH_2Cl$ | $CH_3$ | $CH_3$ | n-$C_3H_7$ | n-$C_3H_7$ | |
| 9 | $CH_2Cl$ | $CH_3$ | $CH_3$ | $CH_3$ | i-$C_3H_7$ | |
| 10 | $CH_2Cl$ | $CH_3$ | $CH_3$ | i-$C_3H_7$ | i-$C_3H_7$ | |
| 11 | $CH_2Cl$ | $CH_3$ | $CH_3$ | $CH_3$ | n-$C_4H_9$ | |
| 12 | $CH_2Cl$ | $CH_3$ | $CH_3$ | $CH_3$ | i-$C_4H_9$ | |
| 13 | $CH_2Cl$ | $CH_3$ | $CH_3$ | $CH_3$ | t-$C_4H_9$ | |
| 14 | $CH_2Cl$ | $CH_3$ | $CH_3$ | $CH_3$ | $C_6H_5$ | |

Die erfindungsgemässen N-Methyl-N-silyl-carbamate der Formel I sind geeignet, Schädlinge aus der Klasse der Insekten, Zecken und Nematoden wirksam zu bekämpfen.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Grosser Frostspanner), Bupalus piniarus (Kiefernspanner), Hyphantria cunea (Weisser Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweissling), Aporia crataegi (Baumweissling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestis (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüssler), Otiorrhynchus ovatus (Erdbeerwurzelrüssler), Hylobies abietis (Grosser Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüssler), Ceuthorrhynchus napi (Grosser Kohltriebrüssler), Sitophilus granaria (Kornkäfer), Anisandrus dispar (Ungleicher Holzborkenkäfer), Ips typographus (Buchdrucker), Blastophagus piniperda (Gefurchter Waldgärtner);

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata;

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weisse Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Grosse Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rasae (Grosse Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weisstannenstammlaus), Adelges laricis (Rote Fichtengallenlaus), Viteus vitifolii (Reblaus);

aus der Ordnung der Termiten (Isoptera) beispielsweise Reticulitermes lucifugus, Calotermes flavicollis, Leucotermes flavipes, Termes natalensis;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melanoplus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Milben und Zecken (Acarina) beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z.B. Meloidogyne incognita, Meloidogyne hapla, Meloidogyne javanica, Zysten bildende Nematoden, z.B. Heterodera rostochiensis, Heterodera schachtii, Heterodera avenae, Heterodera glycines, Heterodera triflolii, Stock- und

Blattälchen, z.B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die erfindungsgemässen Verbindungen können im Pflanzenschutz sowie auf dem Hygiene-, Vorratsschutz- und Veterinärsektor als Schädlingsbekämpfungsmittel eingesetzt werden.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen angewendet werden. Die Anwendungsformen richten sich ganz nach den Verwendungszwekken; sie sollten in jedem Fall möglichst die feinste Verteilung der erfindungsgemässen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wässrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Saze von sulfatiertem Fettalkoholgylkolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,1 und 95 Gew.-% Wirkstoff, vorzugsweise zwischen 0,5 und 90 Gew.-%.

Die Wirkstoffkonzentrationen in den anwendungsfertigen Zubereitungen können in grösseren Bereichen variiert werden. Im allgemeinen liegen sie zwischen 0,0001 und 10%, vorzugsweise zwischen 0,01 und 1%.

Beispiele für Formulierungen sind:

I. 3 Gewichtsteile 2-(1-Methoxy-2-chlor-ethoxy)-phenyl-N-methyl-N-trimethylsilyl-carbamat werden mit 97 Gewichtsteilen feinteiligem Kaolin innig vermischt. Man erhält auf diese Weise ein Stäubemittel, das 3 Gew.-% des Wirkstoffs enthält.

II. 30 Gewichtsteile 2-(1-Methoxy-2-chlor-ethoxy)-phenyl-N-methyl-N-trimethylsilyl-carbamat werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile 2-(1-Methoxy-2-chlor-ethoxy)-phenyl-N-methyl-N-trimethylsilyl-carbamat werden in einer Mischung gelöst, die aus 80 Gewichtsteilen Xylol, 10 Gewichtsteilen des Anlagerungsprodukts von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsprodukts von 40 Mol Ethylenoxid an 1 Mol Rizinusöl besteht. Durch Ausgiessen und feines Verteilen der Lösung in 100 000 Gewichtsteilen Wasser erhält man eine wässrige Dispersion, die 0,02 Gew.-% des Wirkstoffs enthält.

IV. 20 Gewichtsteile 2-(1-Methoxy-2-chlor-ethoxy)-phenyl-N-methyl-N-trimethylsilylcarbamat werden in einer Mischung gelöst, die aus 40 Gewichtsteilen Cyclohexanon, 30 Gewichtsteilen Isobutanol, 20 Gewichtsteilen des Anlagerungsprodukts von 7 Mol Ethylenoxid an 1 Mol Isooctylphenol

und 10 Gewichtsteilen des Anlagerungsprodukts von 40 Mol Ethylenoxid an 1 Mol Rizinusöl besteht. Durch Eingiessen und feines Verteilen der Lösung in 100 000 Gewichtsteilen Wasser erhält man eine wässrige Dispersion, die 0,02 Gew.-% des Wirkstoffs enthält.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können die Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemässen Mitteln im Gewichtsverhältnis 1:10 bis 10:1 zugemischt werden.

Beispielsweise können folgende Mittel zugemischt werden:

1,2-Dibrom-3-chlorpropan, 1,3-Dichlorpropen, 1,3-Dichlorpropen + 1,2-Dichlorpropan, 1,2-Dibrom-ethan, 2-sec.-Butyl-phenyl-N-methylcarbamat, o-Chlorphenyl-N-methylcarbamat, 3-Isopropyl-5-methylphenyl-N-methylcarbamat, o-Isopropoxy-phenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)-oxy]-1-thiooxamidat, N-(2-Methyl-chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diethyl-O-(p-nitrophenyl)-phosphorthioat, O-Ethyl-O-(p-nitrophenyl)-phenyl-phosphorthioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4-dichlorphenyl)-phenyl-phosphonothioat, O,O-Dimethyl-O-(2,4,5-trichlorphenyl)-phosphorthioat, O-Ethyl-O-(2,4,5-trichlorphenyl)-ethyl-phosphonothioat, O,O-Dimethyl-O-(4-brom-2,5-diclorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropyl-phosphoramidat, O,O-Diethyl-O-[p-methylsulfinyl-phenyl]-phosphorthioat, O-Ethyl-S-phenyl-ethyl-phosphonodithioat, O,O-Diethyl-[2-chlor-1-(2,4-dichlorphenyl)-vinyl]-phosphat, O,O-Dimethyl-[2-chlor-1-(2,4,5-trichlorphenyl)]-vinyl-phosphat, O,O-Dimethyl-S-(1'-phenyl)-ethylacetat-phosphordithioat, Bis-(dimethylamino)-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O-2,2-dichlorvinyl-phosphat, O,O-Dimethyl-1,2-dibrom-2,2-dichlorethylphosphat, O,O-Dimethyl-2,2,2-trichlor-1-trichlor-1-hydroxy-ethylphosphonat, O,O-Dimethyl-S-[1,2-biscarbethoxy-ethyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoyl-methyl)-phosphorthioat, O,O-Dimethyl-S-(N-methoxyethyl-carbamoyl-methyl)-phosphordithioat, O,O-Dimethyl-S-(N-formyl-N-methyl-carbamoylmethyl-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phoshpat, O,O-Dimethyl-O-[(1-methyl-2-chlor-2-diethylcarbamoyl)-vinyl]-phoshpat, O,O-Diethyl-S-(ethylthio-methyl(-phosphordithioat, O,O-Diethyl-O-[(p-chlorphenylthio)-methyl]-phosphordithioat, O,O-Dimethyl-S-(2-ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthio-ethyl)-phosphordithioat, O,O-Diethyl-S-(2-ethylsulfinyl-ethyl)-phosphorthioat, O,O-Diethyl-thiophosphoryliminophenyl-acetonitril, O,O-Diethyl-S-(2-chlor-1-phthalimidoethyl)-phosphordithioat, O,O-Diethyl-S-[6-chlor-benzoxazolon-(2)-yl-(3)]-methyldithiophoshat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O-[2-isopropyl-4-methyl-pyrimidinyl(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphoramido-thioat, O,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,trans-chrysanthemat, 5-Benzyl-furyl-(3)-methyl-DL-cis,trans-chrysanthemat, 3-Phenoxybenzyl(±)-cis,trans-2,2-dimethyl-3-(2,2-dichlorvinyl)-cyclopropancarboxylat, α-Cyano-3-phenoxybenzyl(±(-cis,trans-2,2-dimethyl-3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoethyl-DL-cis,trans-chrysanthemat, 2-Methyl-5-(2-propinyl)-3-furylmethyl-chrysanthemat, (α-Cyano-3-phenoxybenzyl)-α-isopropyl-4-chlorphenylacetat.

Die folgenden Beispiele belegen die biologische Wirkung der neuen Verbindungen. Vergleichsmittel ist der bekannte Wirkstoff 1-Naphthyl-N-methyl-carbamat (US-PS 2 903 478).

*Beispiel A*

Kontaktwirkung auf Schaben (Blatta orientalis)

Der Boden eines 1-l-Einmachglases wird mit der acetonischen Lösung des Wirkstoffs behandelt.

Nach dem Verdunsten des Lösungsmittels setzt man je Glas 5 adulte Schaben. Die Mortalitätsrate wird nach 48 Stunden bestimmt.

| Wirkstoff Nr. | Wirkstoffmenge pro Glas [mg] | Mortalitätsrate [%] |
|---|---|---|
| 1 | 0,01 | 80 |
| Vergleichsmittel | 0,1 | 100 |
| | 0,05 | 20 |

*Beispiel B*

Kontaktwirkung auf Kornkäfer (Sitophilus granaria)

Petrischalen von 10 cm Durchmesser werden mit acetonischer Wirkstofflösung ausgekleidet. Nach dem Verdunsten des Lösungsmittels belegt man die Schalen mit 100 Kornkäfern. Nach 4 Stunden werden die Käfer in unbehandelte Gefässe überführt. Die Mortalitätsrate wird nach 24 Stunden ermittelt. Dabei wird festgestellt, wieviele Käfer in der Lage sind, nach diesem Zeitpunkt innerhalb 60 Minuten ein unbehandeltes Pappschälchen (Durchmesser 40 mm, Höhe 10 mm) zu verlassen.

| Wirkstoff Nr. | Wirkstoffmenge pro Petrischale [mg] | Mortalitätsrate [%] |
|---|---|---|
| 1 | 0,4 | 100 |
| | 0,2 | 80 |
| Vergleichsmittel | 2,0 | unwirksam |

*Beispiel C*

Kontaktwirkung auf Stubenfliegen (Musca domestica); Dauerkontakt

Beide Teile einer Petrischale von 10 cm Durchmesser werden mit insgesamt 2 ml der acetonischen Wirkstofflösung ausgekleidet. Nach dem Verdunsten des Lösungsmittels (ca. 30 Minuten) bringt man je 10 Fliegen in die Schalen.

| Wirkstoff Nr. | Wirkstoffmenge pro Petrischale [mg] | Mortalitätsrate [%] |
|---|---|---|
| 1 | 0,02 | 100 |
| Vergleichsmittel | 0,2 | unwirksam |

*Beispiel D*

Kontaktwirkung auf Blattläuse (Aphis fabae); Spritzversuch

Getopfte Bohnenpflanzen (Vicia faba) mit starken Blattlauskolonien werden in der Spritzkammer mit den wässrigen Wirkstoffaufbereitungen tropfnass gespritzt. Die Auswertung erfolgt nach 24 Stunden.

| Wirkstoff Nr. | Konzentration der Wirkstoffaufbereitung [Gew.-%] | Mortalitätsrate [%] |
|---|---|---|
| 1 | 0,01 | 100 |
| Vergleichsmittel | 0,04 | 100 |
| | 0,02 | unwirksam |

*Beispiel E*

Systemische Wirkung auf Blattläuse (Aphis fabae); Dauerwirkung im Boden

4 kg Gartenerde wird mit dem Wirkstoff innig vermischt und in Mitscherlichtöpfe (Durchmesser 20 cm, Höhe 18 cm) gefüllt. In jeden Topf steckt man in den vorgesehenen Zeitabständen je 4 Bohnen (Vicia faba). Diese werden im 4-Blattstadium mit Blattläusen infiziert. Nach 48 Stunden registriert man Mortalität oder Kolonienbildung.

| Wirkstoff Nr. | Konzentration des Wirkstoffs in der Erde [Gew.-%] | Mortalitätsrate [%] |
|---|---|---|
| 1 | 0,05 | 100 |
| Vergleichsmittel | 0,1 | unwirksam |

*Beispiel F*

Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die wässrige Wirkstoffaufbereitung. Die Beutel werden frei aufgehängt. Nach 48 Stunden wird die Wirkung auf die Zecken beurteilt. Bei einer Konzentration der Emulsion von 0,002 Gew.-% Wirkstoff Nr. 1 beträgt die Mortalität 80%.

**Patentansprüche für die Vertragsstaten:**
BE, DE, FR, GB, IT, NL

1. N-Methyl-N-silyl-carbamate der Formel I

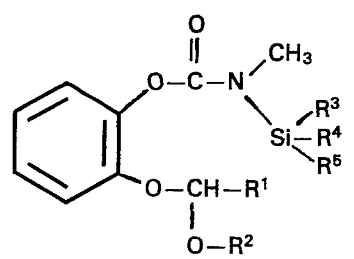

(I),

in der

$R^1$ Wasserstoff oder einen gegebenenfalls durch Halogen substituierten Alkylrest mit bis zu 4 Kohlenstoffatomen,

$R^2$, $R^3$ und $R^4$ unabhängig voneinander einen Al-

kylrest mit bis zu 4 Kohlenstoffatomen und

$R^5$ einen Alkylrest mit bis zu 4 Kohlenstoffatomen oder Phenyl bedeuten.

2. 2-(1-Methoxy-2-chlor-ethoxy)-phenyl-N-methyl-N-trimethylsilyl-carbamat.

3. Verfahren zur Herstellung von N-Methyl-N-silyl-carbamaten der Formel I gemäss Anspruch 1, dadurch gekennzeichnet, dass man ein Carbamat der Formel II

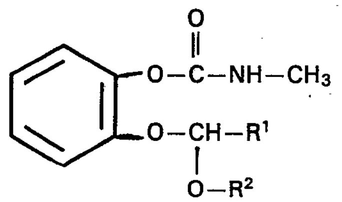 (II),

in der $R^1$ und $R^2$ die im Anspruch 1 genannten Bedeutungen haben, mit einem Halogensilan der Formel III

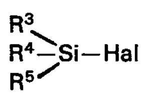 (III),

in der $R^3$, $R^4$ und $R^5$ die im Anspruch 1 genannten Bedeutungen haben und Hal für Halogen steht, gegebenenfalls in Gegenwart eines inerten Lösungsmittels und/oder in Gegenwart eines säurebindenden Mittels bei einer Temperatur im Bereich von —40 bis +100°C umsetzt.

4. Verfahren zur Herstellung von N-Methyl-N-silyl-carbamaten der Formel I gemäss Anspruch 1, dadurch gekennzeichnet, dass man ein Carbamat der Formel II

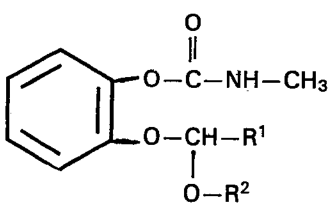 (II),

mit einem Silylüberträger der Formel IV

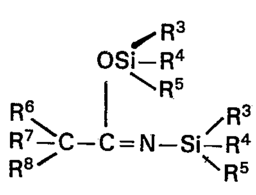 (IV),

in der $R^3$, $R^4$ und $R^5$ die im Anspruch 1 genannten Bedeutungen haben und $R^6$, $R^7$ und $R^8$ unabhängig voneinander Wasserstoff, Halogen oder einen Alkylrest mit bis zu 4 Kohlenstoffatomen bedeuten,
in Gegenwart eines inerten Lösungsmittels gegebenenfalls unter Zusatz eines Reaktionsbeschleunigers bei einer Temperatur im Bereich von —40 bis +100°C umsetzt.

5. Schädlingsbekämpfungsmittel, enthaltend inerte Zusatzstoffe und ein N-Methyl-N-silyl-carbamat der Formel I gemäss Anspruch 1.

6. Verfahren zur Bekämpfung von Schädlingen, dadurch gekennzeichnet, dass man N-Methyl-N-silyl-carbamate der Formel I gemäss Anspruch 1 auf die Schädlinge bzw. deren Lebensraum einwirken lässt.

**Patentansprüche für den Vertragsstaat: AT**

1. Schädlingsbekämpfungsmittel, enthaltend ein N-Methyl-N-silyl-carbamat der Formel I

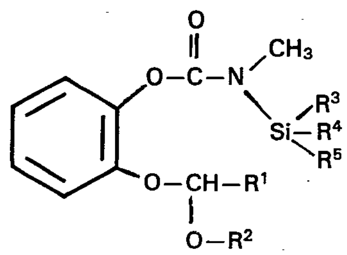 (I),

in der
$R^1$ Wasserstoff oder einen gegebenenfalls durch Halogen substituierten Alkylrest mit bis zu 4 Kohlenstoffatomen,
$R^2$, $R^3$ und $R^4$ unabhängig voneinander einen Alkylrest mit bis zu 4 Kohlenstoffatomen und
$R^5$ einen Alkylrest mit bis zu 4 Kohlenstoffatomen oder Phenyl bedeuten,
als Wirkstoff.

2. Schädlingsbekämpfungsmittel, enthaltend inerte Zusatzstoffe und ein N-Methyl-N-silyl-carbamat der Formel I gemäss Anspruch 1.

3. Schädlingsbekämpfungsmittel, enthaltend 2-(1-Methoxy-2-chlor-ethoxy)-phenyl-N-methyl-N-trimethylsilyl-carbamat als Wirkstoff.

4. Verfahren zur Herstellung von N-Methyl-N-silyl-carbamaten der Formel I gemäss Anspruch 1, dadurch gekennzeichnet, dass man ein Carbamat der Formel II

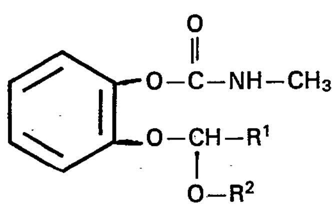 (II),

in der $R^1$ und $R^2$ die im Anspruch 1 genannten Bedeutungen haben, mit einem Halogensilan der Formel III

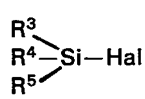 (III),

in der $R^3$, $R^4$ und $R^5$ die im Anspruch 1 genannten Bedeutungen haben und Hal für Halogen steht, gegebenenfalls in Gegenwart eines inerten Lösungsmittels und/oder in Gegenwart eines säurebindenden

Mittels bei einer Temperatur im Bereich von —40 bis +100°C umsetzt.

5. Verfahren zur Herstellung von N-Methyl-N-silyl-carbamaten der Formel I gemäss Anspruch 1, dadurch gekennzeichnet, dass man ein Carbamat der Formel II

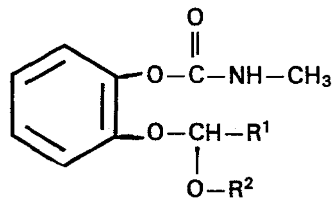

(II),

mit einem Silylüberträger der Formel IV

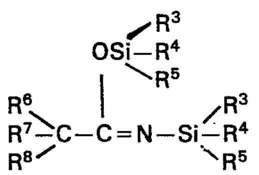

(IV),

in der $R^3$, $R^4$ und $R^5$ die im Anspruch 1 genannten Bedeutungen haben und $R^6$, $R^7$ und $R^8$ unabhängig voneinander Wasserstoff, Halogen oder einen Alkylrest mit bis zu 4 Kohlenstoffatomen bedeuten,
in Gegenwart eines inerten Lösungsmittels gegebenenfalls unter Zusatz eines Reaktionsbeschleunigers bei einer Temperatur im Bereich von —40 bis +100°C umsetzt.

**Claims for the Contracting States:**
BE, DE, FR, GB, IT, NL

1. An N-methyl-N-silyl-carbamate of the formula I

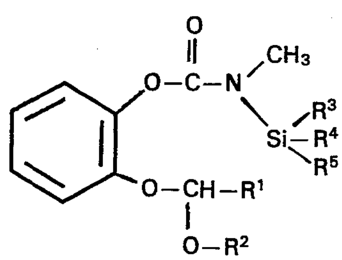

(I),

where $R^1$ denotes hydrogen or unsubstituted or halogen-substituted alkyl of up to 4 carbon atoms, $R^2$, $R^3$ and $R^4$, independently of one another, denote alkyl of up to 4 carbon atoms, and $R^5$ denotes alkyl of up to 4 carbon atoms or phenyl.

2. 2-(1-Methoxy-2-chloroethoxy)-phenyl-N-methyl-N-trimethyl-silyl-carbamate.

3. A process for the manufacture of an N-methyl-N-silyl-carbamate of the formula I as claimed in claim 1, wherein a carbamate of the formula II

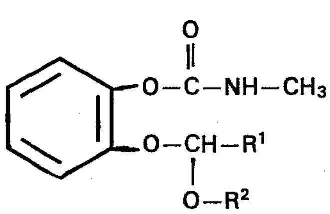

(II),

where $R^1$ and $R^2$ have the meanings given in claim 1, is reacted with a halosilane of the formula III

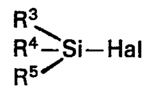

(III),

where $R^3$, $R^4$ and $R^5$ have the meanings given in claim 1 and Hal denotes halogen, in the presence or absence of an inert solvent and/or in the presence of an acid binder, at from —40 to +100°C.

4. A process for the manufacture of an N-methyl-N-silyl-carbamate of the formula I as claimed in claim 1, wherein a carbamate of the formula II

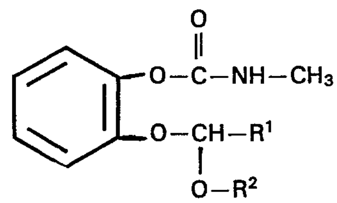

(II),

is reacted with a silyl transferring agent of the formula IV

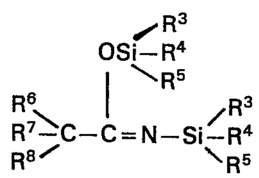

(IV),

where $R^3$, $R^4$ and $R^5$ have the meanings given in claim 1 and $R^6$, $R^7$ and $R^8$, independently of one other, denote hydrogen, halogen or alkyl of up to 4 carbon atoms, in the presence of an inert solvent and, if desired, with the addition of a reaction accelerator, at from —40 to +100°C.

5. A pesticide containing inert additives and an N-methyl-N-silyl-carbamate of the formula I as claimed in claim 1.

6. A process for combating pests, wherein an N-methyl-N-silyl-carbamate of the formula I as claimed in claim 1 is allowed to act on the pests or their habitat.

**Claims for the Contracting State:** AT

1. A pesticide containing, as active ingredient, an N-methyl-N-silyl-carbamate of the formula I

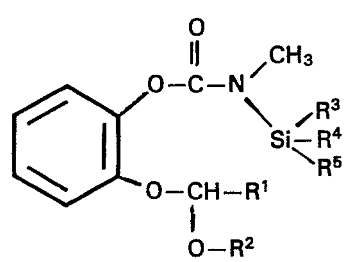

(I),

where $R^1$ denotes hydrogen or unsubstituted or halogen-substituted alkyl of up to 4 carbon atoms,

$R^2$, $R^3$ and $R^4$, independently of one another, denote alkyl of up to 4 carbon atoms, and $R^5$ denotes alkyl of up to 4 carbon atoms or phenyl.

2. A pesticide containing inert additives and an N-methyl-N-silyl-carbamate of the formula I as defined in claim 1.

3. A pesticide containing 2-(1-methoxy-2-chloroethoxy)-phenyl-N-methyl-N-trimethyl-silyl-carbamate as active ingredient.

4. A process for the manufacture of an N-methyl--N-silyl-carbamate of the formula I as defined in claim 1, wherein a carbamate of the formula II

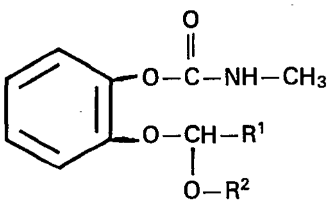

(II),

where $R^1$ and $R^2$ have the meanings given in claim 1, is reacted with a halosilane of the formula III

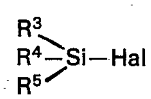

(III),

where $R^3$, $R^4$ and $R^5$ have the meanings given in claim 1 and Hal denotes halogen, in the presence or absence of an inert solvent and/or in the presence of an acid binder, at from −40 to +100°C.

5. A process for the manufacture of an N-methyl--N-silyl-carbamate of the formula I as defined in claim 1, wherein a carbamate of the formula II

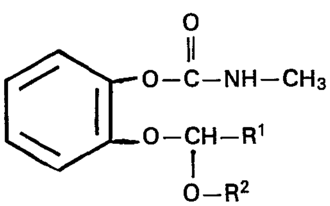

(II),

is reacted with a silyl transferring agent of the formula IV

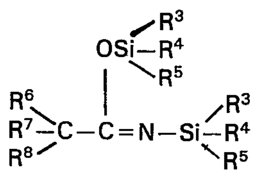

(IV),

where $R^3$, $R^4$ and $R^5$ have the meanings given in claim 1 and $R^6$, $R^7$ and $R^8$, independently of one other, denote hydrogen, halogen or alkyl of up to 4 carbon atoms, in the presence of an inert solvent and, if desired, with the addition of a reaction accelerator, at from −40 to +100°C.

**Revendications pour les Etats Contractants:**
BE, DE, FR, GB, IT, NL

1. Carbamate de N-methyl-N-silyle de formule I

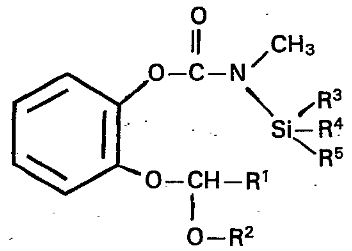

(I),

dans laquelle

$R^1$ représente l'hydrogène ou un reste alkyle ayant jusqu'à 4 atomes de carbone, éventuellement substitué par un halogène,

$R^2$, $R^3$ et $R^4$ représentent, indépendamment les unes des autres, un reste alkyle ayant jusqu'à 4 atomes de carbone et

$R^5$ représente un reste alkyle, ayant jusqu'à 4 atomes de carbone, ou phényle.

2. Carbamate de 2-(1-methoxy-2-chlor-ethoxy)--phenyl-N-methyl-N-trimethylsilyle.

3. Procédé de préparation de carbamates de N-methyl-N-silyle de formule I selon la revendication 1, caractérisé par le fait qu'à une température de la zone de −40 à +100°C, éventuellement en présence d'un solvant inerte et/ou en présence d'un liant d'acide, on fait réagir un carbamate de formule II

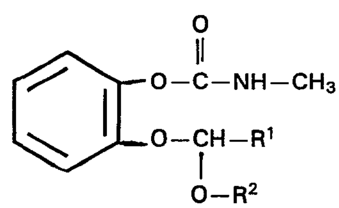

(II),

dans laquelle $R^1$ et $R^2$ ont les significations indiquées dans la revendication 1, avec un halogènosilane de formule III

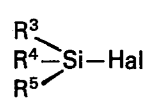

(III),

dans laquelle $R^3$, $R^4$ et $R^5$ ont les significations indiquées dans la revendication 1 et où Hal représente un halogène.

4. Procédé de préparation de carbamates de N-methyl-N-silyle de formule I selon la revendication 1, caractérisé par le fait qu'à une température de la zone de −40 à +100°C, en présence d'un solvant inerte, éventuellement avec addition d'un accélérateur de réaction, on fait réagir un carbamate de formule II

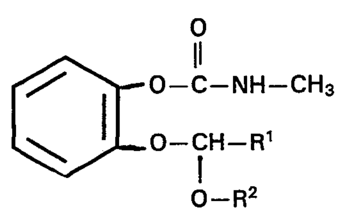

(II),

avec un véhicule de silyle de formule IV

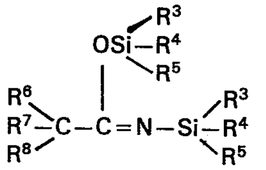

(IV),

dans laquelle $R^3$, $R^4$ et $R^5$ ont les significations indiquées dans la revendication 1 et $R^6$, $R^7$ et $R^8$ représentent, indépendamment les unes des autres, hydrogène, halogène ou un reste alkyle ayant jusqu'à 4 atomes de carbone.

5. Pesticide, contenant des additifs inertes et un carbamate de N-methyl-N-silyle de formule I selon la revendication 1.

6. Procédé de lutte contre les parasites, caractérisé par le fait qu'on fait agir sur les parasites ou leur biotope un carbamate de N-methyl-N-silyle de formule I selon la revendication 1.

**Revendications pour l'Etat Contractant:** AT

1. Pesticide contenant, comme principe actif, un carbamate de N-methyl-N-silyle de formule I

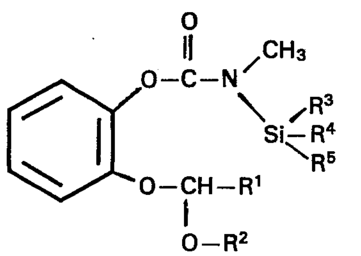

(I),

dans laquelle

$R^1$ représente l'hydrogène ou un reste alkyle ayant jusqu'à 4 atomes de carbone, éventuellement substitué par un halogène,

$R^2$, $R^3$ et $R^4$ représentent, indépendamment les unes des autres, un reste alkyle ayant jusqu'à 4 atomes de carbone et

$R^5$ représente un reste alkyle, ayant jusqu'à 4 atomes de carbone, ou phényle.

2. Pesticide, contenant des additifs inertes et un carbamate de N-methyl-N-silyle de formule I selon la revendication 1.

3. Pesticide contenant, comme principe actif, un carbamate de 2-(1-methoxy-2-chloro-ethoxy)-phenyl-N-methyl-N-trimethyl-silyle.

4. Procédé de préparation de carbamates de N-methyl-N-silyle de formule I selon la revendication 1, caractérisé par le fait qu'à une température de la zone de −40 à +100°C, éventuellement en présence d'un solvant inerte et/ou en présence d'un liant d'acide, on fait réagir un carbamate de formule II

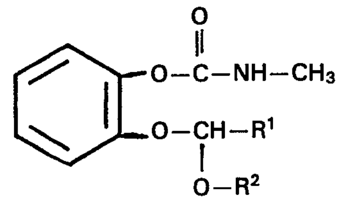

(II),

dans laquelle $R^1$ et $R^2$ ont les significations indiquées dans la revendication 1, avec un halogènosilane de formule III

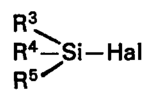

(III),

dans laquelle $R^3$, $R^4$ et $R^5$ ont les significations indiquées dans la revendication 1 et où Hal représente un halogène.

5. Procédé de préparation de carbamates de N-methyl-N-silyle de formule I selon la revendication 1, caractérisé par le fait qu'à une température de la zone de −40 à +100°C, en présence d'un solvant inerte, éventuellement avec addition d'un accélérateur de réaction, on fait réagir un carbamate de formule II

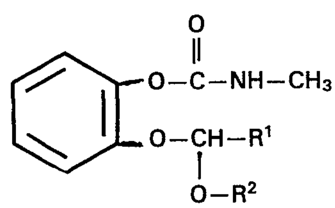

(II),

avec un véhicule de silyle de formule IV

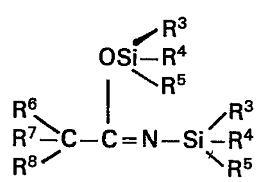

(IV),

dans laquelle $R^3$, $R^4$ et $R^5$ ont les significations indiquées dans la revendication 1 et $R^6$, $R^7$ et $R^8$ représentent, indépendamment les unes des autres, hydrogène, halogène ou un reste alkyle ayant jusqu'à 4 atomes de carbone.